# EUROPÄISCHE PATENTSCHRIFT

(11) **EP 0 391 268 B1**
(45) Veröffentlichungstag und Bekanntmachung des Hinweises auf die Patenterteilung: **09.02.1994**
(21) Anmeldenummer: 90106111.9
(22) Anmeldetag: 30.03.1990
(51) Int. Cl.: C09B 3/52

(54) **Verfahren zur Herstellung von Farbstoffen der Dibenzpyrenchinon-Reihe**
Manufacture of dyestuffs of the dibenzopyrenequinone series
Préparation de colorants de la série de dibenzopyrènequinones

(30) Priorität: 01.04.1989 DE 3910606; 01.04.1989 DE 3910596
(43) Veröffentlichungstag der Anmeldung: 10.10.1990
(73) Patentinhaber: HOECHST AKTIENGESELLSCHAFT, 65926 Frankfurt am Main (DE)
(72) Erfinder: Steuernagel, Hans Helmut, Dr., D-6233 Kelkheim (Taunus) (DE)

(56) Entgegenhaltungen:
- DE-C- 426 710
- DE-C- 518 316
- US-A- 3 796 733
- FIAT FINAL REPORT Nr. 1313, Band 2

## Beschreibung

Die vorliegende Erfindung betrifft ein Verfahren zur Herstellung von Farbstoffen der Dibenzpyrenchinon-Reihe der allgemeinen Formel (1) 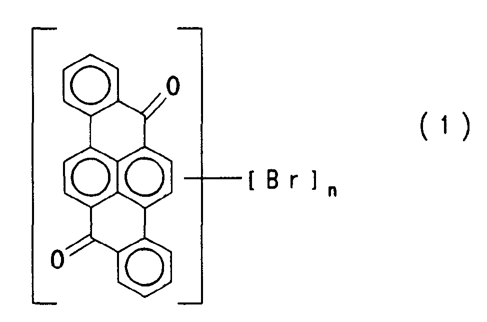
wobei n eine ganze oder gebrochene Zahl von 0 bis 4 bedeutet, dadurch gekennzeichnet, daß man gemäß einer Mehrstufen-Eintopf-Technik zunächst Naphthalin unter Erhitzen auf Temperaturen im Bereich zwischen 60° und 85°C in Gegenwart von Aluminiumchlorid bei Einsatz eines Überschusses von 0 bis 25 %, vorzugsweise höchstens 5 %, an Benzoylchlorid mit der zweifach molaren Menge Benzoylchlorid behandelt und das entstandene 1,5-Dibenzoylnaphthalin nach Verdünnen der resultierenden Schmelze mit Aluminiumchlorid und einem Alkalimetallchlorid sowie in Gegenwart eines Eisensalz-Katalysators durch Einleiten eines Sauerstoffstroms zu Dibenzpyrenchinon der Formel (1) mit n = 0 cyclisiert und dieses nachfolgend bei einer Temperatur im Bereich zwischen 125° und 150°C mit der 0- bis 4-fachen molaren Menge Brom umsetzt.

Nach Beendigung der Synthese wird die Reaktionsmischung in üblicher Weise auf Farbstoffe der Formel (1) hin aufgearbeitet.

Daß hierbei im Falle einer Reduzierung des Benzoylchloridüberschusses von 42 auf mengenmäßig wesentlich niedrigere Werte und bei der damit erschwerten Durchmischbarkeit des Reaktionsgemisches trotzdem eine hinreichende Dibenzoylierung des Naphthalins erzielt wird, war ohne Zweifel überraschend. Darüber hinaus konnte nicht erwartet werden, daß man auf die Isolierung und Reinigung des Zwischenproduktes 1,5-Dibenzoyl-naphthalin verzichten und Benzoylierung, oxidativen Ringschluß zum Dibenzpyrenchinon und dessen Bromierung durchgehend ohne Wechsel des Umsetzungsbehälters bewerkstelligen kann.

Die Erzeugung von Dibenzpyrenchinon-Farbstoffen der Formel (1) ist an und für sich bekannt:

Die meisten dieser herkömmlichen Methoden gehen jedoch nicht von Naphthalin aus, sondern von anderen
Startmaterialien, wie beispielsweise Benzanthron (DE-PS 412 053; Beilstein 7 II, 789), 1-Benzoyl-naphthalin (DE-PS 483 229; Beilstein 7 II, 789) oder 1,5-Dibenzoyl-naphthalin (DE-PS 426 710; Beilstein 7 II, 789), welche zunächst in separaten Arbeitsgängen in Substanz hergestellt und auch isoliert werden müssen.
Mit Naphthalin als Ausgangsprodukt ist in FIAT FINAL REPORT Nr. 1313, Bd. 2, Seiten 124-128 zwar ein Verfahren zur Herstellung des Farbstoffs der Formel (1) mit n = 0 - also ohne nachherige Bromierung - beschrieben. Allerdings handelt es sich hierbei nicht um eine Eintopf-Reaktion, sondern Benzoylierung und anschließender Ringschluß der Dibenzoylverbindung des Naphthalins in einer Aluminiumchlorid/Natriumchlorid-Schmelze mit Sauerstoff zum Dibenzpyrenchinon finden in getrennten Umsetzungsgefäßen statt, was eine Überführung der Benzoylierungsschmelze in den anderen Reaktionsbehälter einschließt. Die dazu erforderliche Fließfähigkeit der Benzoylierungsschmelze resultiert aus dem verwendeten Benzoylchlorid-Überschuß von 42 %. Dieser mengenmäßig erhebliche Mehraufwand geht im weiteren Verlauf des Verfahrens als Benzoesäure ins Abwasser - ist also verloren - und aus heutiger Sicht als Abwasserbelastung unerwünscht. Bei einer im Falle n ≠ 0 auf die oxidative Cyclisierung folgenden Bromierung würde dieser nicht umgesetzte Benzoylchlorid-Überschuß von 42 % einen entsprechenden zusätzlichen Bromverbrauch verursachen, weil Benzoylchlorid in der Aluminiumchlorid/Natriumchlorid-Schmelze leicht mit der zweifach molaren Menge Brom unter Substitution reagiert.

Die DE-PS 426 710 beschreibt die Kondensation von 1,5-Dibenzoyl-naphthalin unter Erhitzen in Aluminiumchlorid bei 170-195 °C zu Dibenzpyrenchinon der Formel (1) mit n = 0, ohne allerdings einen Hinweis auf Dauer oder Ausbeute der Reaktion zu geben.

Gemäß DE-PS 518 316 erfolgt die Cyclisierung von 1,5-Dibenzoyl-naphthalin in einer auf 120-130°C erhitzten Natrium-aluminiumchlorid-Schmelze durch 48-60 Stunden langes Einleiten von Luft, wobei eine Ausbeute von über 70 % an gereinigtem Farbstoff der Formel (1) mit n = 0 erwähnt ist.

Es wurde nun gefunden, daß sich die Reaktionsdauer der oxidativen Cyclisierung von 1,5-Dibenzoyl-naphthalin erheblich verkürzen läßt, wenn man der Schmelze aus den Ausgangsmaterialien einen Eisensalz-Katalysator zufügt und die erfindungsgemäßen Umsetzungsbedingungen einhält.

Als solche Katalysatoren sind für die Durchführung des auf diese Weise verbesserten Verfahrens beispielsweise Eisen-(III)-halogenide wie Eisen-(III)-bromid und insbesondere Eisen-(III)-chlorid geeignet. Die erforderliche Menge an dem zugesetzten Katalysator bewegt sich innerhalb der Grenzen von 0,01 bis 1,2 Mol, vorzugsweise von 0,02 bis 0,8 Mol, insbesondere 0,04 bis 0,6 Mol, je Mol 1,5-Dibenzoyl-naphthalin.

Als Alkalimetallchlorid in der benutzten Schmelze dient verfahrensgemäß Kaliumchlorid und vorzugsweise Natriumchlorid.

Die Cyclisierung des 1,5-Dibenzoyl-naphthalins unter Einleiten eines Sauerstoffstroms (vorzugsweise 30 bis 60 l/h je Mol Dibenzoylnaphthalin) in die erhitzte Schmelze erfolgt bei Temperaturen im Bereich von 120° bis 200°C, vorzugsweise zwischen 130° und 160°C. Der Reaktionsfortgang kann durch Dünnschichtchromatographie verfolgt werden.

Die nachfolgende Bromierung des entstandenen Dibenzpyrenchinons der Formel (1) mit n = 0 wird in bekannter Weise (z.B. FIAT FINAL REPORT Nr. 1313, Bd. 2, Seite 128) durch allmähliches Zudosieren von Brom in die Reaktionsschmelze im Temperaturbereich von 125° bis 150°C, bevorzugt bei 125°C bis 135°C vorgenommen, wobei Bromwasserstoff entweicht. Bei zu rascher Bromzugabe können durch mitgerissenes Brom Verluste auftreten.

Je nach Bromzugabe können Mischungen von Farbstoffen der allgemeinen Formel (1) entstehen, welche 0, 1, 2, 3 oder 4 Bromatome je Molekül Dibenzpyrenchinon enthalten. Falls n eine gebrochene Zahl bedeutet, liegt immer eine Mischung unterschiedlich bromierter Moleküle vor und n gibt den durchschnittlichen Bromierungsgrad wieder, der beispielsweise durch Elementaranalyse des aufgearbeiteten Farbstoffs ermittelt werden kann.

Auch der Verlauf der Bromierung kann durch Dünnschichtchromatographie kontrolliert werden.

Nach beendeter Bromierung - im Falle n = 0 ohne Bromzugabe - wird die Reaktionsschmelze in bekannter Weise mit Wasser zersetzt, vorteilhaft unter Zugabe von verdünnter Salzsäure; der ausgefallene Rohfarbstoff wird abfiltriert und neutralgewaschen. Der anfallende Rohfarbstoff weist schon einen guten Reinheitsgrad auf, der durch übliche Schönungsmethoden wie Erhitzen mit alkalischer Natriumhypochloritlösung noch gesteigert werden kann. Eine andere bekannte Art der Reinigung besteht im Umküpen des Rohfarbstoffs, beispielsweise mittels Natriumdithionit in alkalischem Medium, wobei das gewünschte Verfahrenserzeugnis in Lösung geht, Abfiltrieren von den nicht verküpbaren Verunreinigungen und Rückoxidation des Farbstoffs der Formel (1) aus der geklärten Küpe mit Luft oder Chlorbleichlauge unter Ausfällung und Isolierung.

Die nach dem erfindungsgemäßen Verfahren erhältlichen Verbindungen der allgemeinen Formel (1) sind wertvolle Küpenfarbstoffe, wie beispielsweise C.I. Vat Yellow 4 (C.I.-Nr. 59100) mit n = 0 oder C.I. Vat Orange 1 (C.I.-Nr. 59105) mit n = 2.

Der Zusatz eines Eisensalz-Katalysators bei der oxidativen Cyclisierung des 1,5-Dibenzoyl-naphthalins nach dem beanspruchten Verfahren bringt außer der deutlichen Verkürzung der Reaktionsdauer einen weiteren Vorteil insofern, als die nach Aufarbeitung und Schönung erhaltenen Farbstoffe der Formel (1) Küpenfärbungen auf Baumwolle ergeben, welche etwas farbstärker erscheinen als gleichartig angefertigte Färbungen von solchen Farbstoffen, die auf analoge Weise wie die erfindungsgemäßen Farbstoffe, lediglich unter Weglassen des Eisensalz-Katalysators hergestellt wurden.

Das verbesserte Verfahren wird vorteilhaft so durchgeführt, daß man zunächst 1 Mol Naphthalin in einer homogenen Mischung mit 2,0 bis 2,1 Mol Benzoylchlorid und 3,0 bis 3,1 Mol wasserfreiem Aluminiumchlorid unter Erhitzen 15 bis 25 Stunden lang bei Temperaturen zwischen 60° und 85°C, vorzugsweise bei 65° bis 75°C hält, wobei nur während der ersten 3 Stunden ein Rühren der Schmelze erforderlich ist.

Nach Beendigung der Dibenzoylierung des Naphthalins, deren Verlauf durch Dünnschichtchromatographie oder durch Hochdruck-Flüssigkeitschromatographie verfolgt werden kann, fügt man zum Reaktionsgemisch eine Schmelze oder ein Gemenge aus wasserfreiem Aluminiumchlorid (vorzugsweise 7 bis 12 Mol je Mol Naphthalin) und einem Alkalimetallchlorid, wie Kaliumchlorid, vorzugsweise Natriumchlorid (vorzugsweise 3 bis 7 Mol je Mol Naphthalin) hinzu sowie einen Eisensalz-Katalysator für den oxidativen Ringschluß (0,01 bis 1,2 Mol, vorzugsweise 0,02 bis 0,8 Mol und insbesondere 0,04 bis 0,6 Mol je Mol Naphthalin), zweckmäßig ein Eisen-(III)-halogenid wie Eisen-(III)-bromid und vor allem Eisen-(III)-chlorid, und erhält - gegebenenfalls unter Zuheizen - eine bei 120°C leicht rührbare Schmelze, in welche ein Sauerstoffstrom eingeleitet wird. Im Rahmen des mehrstufigen EintopfProzesses hat es sich als zweckmäßig erwiesen, Temperaturen von 180°C beim oxidativen Ringschluß nicht wesentlich zu überschreiten; optimale Cyclisierungstemperaturen liegen in diesem Falle im Bereich zwischen 130° und 160°C.

Die nachstehenden Ausführungsbeispiele dienen zur Erläuterung der Erfindung. Die darin genannten Teile sind Gewichtsteile und die Prozentangaben stellen Gewichtsprozente dar, sofern nichts anderes vermerkt ist. Gewichtsteile verhalten sich zu Volumenteilen wie Kilogramm zu Liter.

### Beispiel 1

a) In einem Planschliffbecher mit Vierhalsdeckel und Glasankerrührer werden 296 Teile Benzoylchlorid vorgelegt. Man trägt unter Rühren 415 Teile wasserfreies Aluminiumchlorid ein und erwärmt das Gemisch auf 90°C, wobei eine homogene Schmelze entsteht. Nach Abkühlen auf 65°C werden dem Ansatz bei 60-65°C innerhalb einer Stunde 128 Teile Naphthalin zugegeben. Danach wird die Temperatur der Reaktionsmischung im Verlauf von 3 Stunden auf 75°C gesteigert und 15-20 Stunden lang bei 75°C gehalten. Dabei kann nach 3 Stunden bei 75°C das Rühren abgestellt werden, falls die Mischung zu zähflüssig geworden ist. Sobald der Gehalt der Reaktionsmischung am Zwischenprodukt 1-Benzoyl-naphthalin einen Anteil von ≦ 2 Molprozent, bezogen auf die Einsatzmenge an Naphthalin, gesunken ist - durch Dünnschichtchromatographie oder durch Hochdruck-Flüssigkeitschromatographie kontrollierbar - gießt man eine 140°C heiße Schmelze aus 1500 Teilen wasserfreiem Aluminiumchlorid, 375 Teilen trockenem Natriumchlorid und 28 Teilen wasserfreiem Eisen-(III)-chlorid dazu, worauf innerhalb kurzer Zeit - gegebenenfalls unter Zuheizen - eine leicht rührbare Schmelze der Gesamtmischung von 120-125°C erhalten wird. In diese leitet man einen Sauerstoffstrom von 30000 - 45000 Volumenteilen je Stunde unter intensivem Rühren ein und steigert die Temperatur der Schmelze innerhalb einer Stunde auf 140°C. Man läßt den Ansatz noch 6-10 Stunden bei 140-150°C rühren, bis gemäß dünnschichtchromatographischer Kontrolle die oxidative Cyclisierung zum Dibenzpyrenchinon beendet ist. Dann wird die Sauerstoffzufuhr abgestellt.
b) Man läßt die Reaktionsmischung aus a) auf 135°C abkühlen und dann innerhalb von etwa 20 Stunden bei 125-135°C unter Rühren 500 Teile Brom unterhalb der Oberfläche in die Schmelze eintreten. Hierauf wird diese noch eine Stunde bei 135°C nachgerührt und dann zu einer Mischung aus 6000 Teilen Wasser, 1000 Teilen Eis und 250 Teilen 31-prozentiger Salzsäure gegossen. Man läßt den Ansatz eine weitere Stunde bei 80-90°C rühren, saugt danach den Niederschlag ab und wäscht den abgeschiedenen Farbstoff mit Wasser neutral.
c) Der feuchte Rohfarbstoff aus b) wird in 10000 Teilen Wasser verrührt und mit einer Stickstoffatmosphäre überlagert. Unter weiterem, gedrosselten Durchleiten eines Stickstoffstroms werden 1100 Teile 33-prozentige Natronlauge und 220 Teile Natriumdithionit zugefügt. Dann heizt man die Mischung auf 65°C und läßt diese eine Stunde lang bei 65°C rühren. Die verküpte Reaktionsmischung wird nun bei 65°C mit einer Schlauchpumpe auf eine mittels Stickstoff überspülte Nutsche überführt und von nicht verküpbaren Verunreinigungen abgesaugt. Mit einer 70°C heißen Lösung aus 4000 Teilen Wasser, 120 Teilen 33-prozentiger Natronlauge und 20 Teilen Natriumdithionit (alles unter Stickstoff) wird der feste Rückstand nachgewaschen. Nach Beendigung der Filtration unterbindet man die Stickstoffzufuhr und das Gesamtfiltrat wird nun mit 31-prozentiger Salzsäure auf pH 9 gestellt. Zwecks Rückoxidation des Farbstoffs läßt man dann bei pH 9 Natriumhypochlorit-Lösung zufließen, bis die Tüpfelreaktion auf Kaliumjodid/Stärke-Papier einen leichten bleibenden Überschuß anzeigt. Man läßt noch eine Stunde rühren, saugt das ausgefallene Verfahrenserzeugnis ab und wäscht dieses mit Wasser salzfrei.

Der orangefarbene Nutschkuchen liefert beim Trocknen 300 Teile eines Farbstoffs mit einen Bromgehalt von etwa 32 %, der im wesentlichen der Konstitution 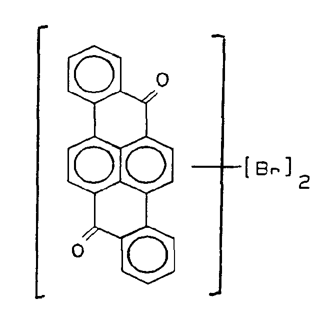
entspricht und in seinen färberischen Eigenschaften mit C.I. Vat Orange 1 der C.I.-Nr. 59105 übereinstimmt.

Zur Rückoxidation des erzeugten Farbstoffs aus der geklärten Küpe kann auch ein anderes Oxidationsmittel verwendet werden, indem man beispielsweise den im Filtrat enthaltenen Farbstoff durch Einleiten von Luft bei pH 7,5-8 fällt.

### Beispiel 2

Verfährt man bei der Cyclisierung, wie in Beispiel 9a) angegeben ist, gießt die nach Abstellen der Sauerstoffzufuhr resultierende Schmelze zu einer Mischung aus 6000 Teilen Wasser, 1000 Teilen Eis und 250 Teilen 31-prozentiger Salzsäure, läßt den Ansatz noch eine Stunde bei 80-90°C nachrühren, saugt dann ab und wäscht den Rückstand anschließend mit Wasser neutral, so erhält man einen Rohfarbstoff, der analog der aus Beispiel 9c) ersichtlichen Vorschrift durch Umküpen mit Natriumdithionit und Rückoxidation aus der filtrierten Küpe gereinigt wird. Nach dem Trocknen erhält man 200 Teile eines bromfreien Farbstoffs, welcher der Formel 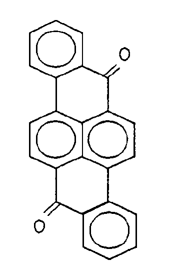
entspricht und der in seinen färberischen Eigenschaften mit C.I. Vat Yellow 4 der C.I.-Nr. 59100 übereinstimmt.

### Beispiel 3

Verfährt man bei der Erzeugung der Verfahrensprodukte, wie in den Beispielen 9a bis 9c beschrieben ist, setzt aber zur Bromierung nur 250 Teile Brom anstelle von 500 Teilen ein, so erhält man einen Farbstoff, der in seiner Konsitution der Formel 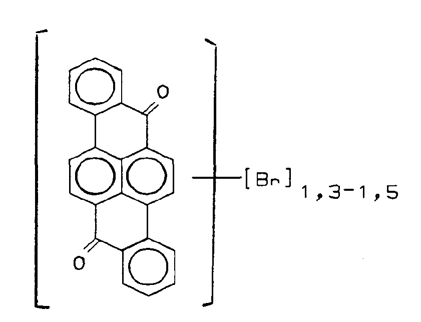
entspricht und der bei Verwendung als Küpenfarbstoff auf Baumwolle rotstichig gelbe Färbungen liefert.

### Beispiel 4

Wenn man entsprechend der Vorschrift in Beispiel 9a) nach der Benzoylierung 1500 Teile wasserfreies Aluminiumchlorid, 375 Teile trockenes Natriumchlorid und 28 Teile wasserfreies Eisen-(III)-chlorid nicht als 140°C heiße Schmelze sondern als ein Gemenge von Raumtemperatur zufügt, dann die Reaktionsmischung, ohne zu rühren, mit einem Heizbad (Badtemperatur < 140°C) aufschmilzt, nach Erreichen der Schmelztemperatur von 115-120°C das Rühren und die Sauerstoffzufuhr anstellt und im übrigen wie in Beispiel 9a) angegeben verfährt, so erhält man eine Schmelze wie in Beispiel 9a), welche sich auf die gleiche Weise und mit dem gleichen Ergebnis gemäß den Beispielen 9b) + 9c), 10) und 11) weiterverarbeiten läßt.

## Patentansprüche

1. Verfahren zur Herstellung von Farbstoffen der Dibenzpyrenchinon-Reihe der allgemeinen Formel (1) 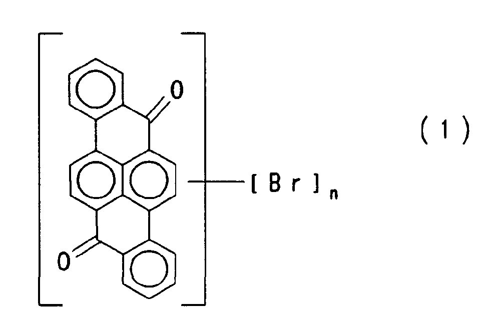 wobei n eine ganze oder gebrochene Zahl von 0 bis 4 bedeutet, dadurch gekennzeichnet, daß man gemäß einer Mehrstufen-Eintopf-Technik zunächst Naphthalin unter Erhitzen auf Temperaturen im Bereich zwischen 60° und 85°C in Gegenwart von Aluminiumchlorid bei Einsatz eines Überschusses von 0 bis 25 % an Benzoylchlorid mit der zweifach molaren Menge Benzoylchlorid behandelt und das entstandene 1,5-Dibenzoylnaphthalin nach Verdünnen der resultierenden Schmelze mit Aluminiumchlorid und einem Alkalimetallchlorid sowie in Gegenwart eines Eisensalz-Katalysators durch Einleiten eines Sauerstoffstroms zu Dibenzpyrenchinon der Formel (1) mit n = 0 cyclisiert und dieses nachfolgend bei einer Temperatur im Bereich zwischen 125° und 150°C mit der 0- bis 4-fachen molaren Menge Brom umsetzt.

2. Verfahren gemäß Anspruch 1, dadurch gekennzeichnet, daß als Alkalimetallchlorid Natriumchlorid verwendet wird.

3. Verfahren gemäß Anspruch 1 oder 2, dadurch gekennzeichnet, daß als Eisensalz-Katalysator ein Eisen-(III)-halogenid, vorzugsweise Eisen-(III)-bromid und insbesondere Eisen-(III)-chlorid verwendet wird.

4. Verfahren gemäß einem oder mehreren der Ansprüche 1 bis 3, dadurch gekennzeichnet, daß 0,01 bis 1,2 Mol, vorzugsweise 0,02 bis 0,8 Mol und insbesondere 0,04 bis 0,6 Mol Eisensalz-Katalysator je Mol 1,5-Dibenzoyl-naphthalin verwendet wird.

5. Verfahren gemäß Anspruch 1 oder 2, dadurch gekennzeichnet, daß die Umsetzung von Naphthalin mit Benzoylchlorid bei Temperaturen im Bereich zwischen 65° und 75°C erfolgt.

6. Verfahren gemäß einem oder mehreren der Ansprüche 1 bis 4, dadurch gekennzeichnet, daß die oxidative Cyclisierung bei Temperaturen im Bereich zwischen 120° und 200°C erfolgt.

7. Verfahren gemäß Anspruch 6, dadurch gekennzeichnet, daß die oxidative Cyclisierung vorzugsweise bei Temperaturen zwischen 130° und 160°C erfolgt.

8. Verfahren gemäß einem oder mehreren der Ansprüche 1 bis 7, dadurch gekennzeichnet, daß die Bromierung bei Temperaturen im Bereich zwischen 125° und 135°C erfolgt.

9. Verfahren gemäß Anspruch 1, dadurch gekennzeichnet, daß ein Überschuß von 0 bis 5 % an Benzoylchlorid verwendet wird.

## Claims

1. A process for preparing dyes of the dibenzopyrenequinone series of the formula (1) 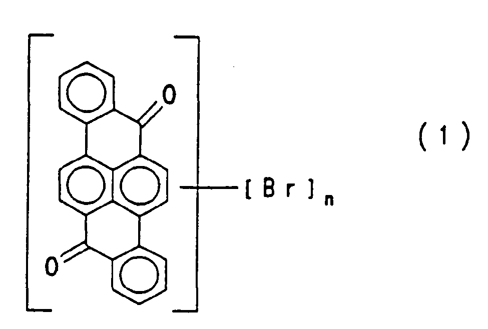 in which n is an integer or a fractional number from 0 to 4, which comprises first treating naphthalene by a multistage one-pot method in the presence of aluminum chloride, while using a benzoyl chloride excess of 0 to 25%, with a two-fold molar amount of benzoyl chloride with heating to temperatures in the range between 60° and 85°C and cyclizing the 1,5-dibenzoylnaphthalene produced, after dilution of the resulting melt with aluminum chloride and an alkali metal chloride and in the presence of an iron salt catalyst, by introduction of an oxygen stream to give the dibenzopyrenequinone of the formula (1) where n is 0 and then reacting this dibenzopyrenequinone at a temperature in the range between 125° and 150°C with a 0-to 4-fold molar amount of bromine.

2. The process as claimed in claim 1, wherein the alkali metal chloride used is sodium chloride.

3. The process as claimed in claim 1 or 2, wherein the iron salt catalyst used is an iron(III) halide, preferably iron(III) bromide and in particular iron(III) chloride.

4. The process as claimed in one or more of claims 1 to 3, wherein 0.01 to 1.2 mol, preferably 0.02 to 0.8 mol and in particular 0.04 to 0.6 mol, of iron salt catalyst are used per mole of 1,5-dibenzoylnaphthalene.

5. The process as claimed in claim 1 or 2, wherein the reaction of naphthalene with benzoyl chloride is carried out at temperatures in the range between 65° and 75°C.

6. The process as claimed in one or more of claims 1 to 4, wherein the oxidative cyclization is carried out at temperatures in the range between 120° and 200°C.

7. The process as claimed in claim 6, wherein the oxidative cyclization is preferably carried out at temperatures of between 130° and 160°C.

8. The process as claimed in one or more of claims 1 to 7, wherein the bromination is carried out at temperatures in the range between 125° and 135°C.

9. The process as claimed in claim 1, wherein a benzoyl chloride excess of 0 to 5% is used.

## Revendications

1. Procédé pour préparer des colorants de la série des dibenzopyrènequinones de formule générale (1) 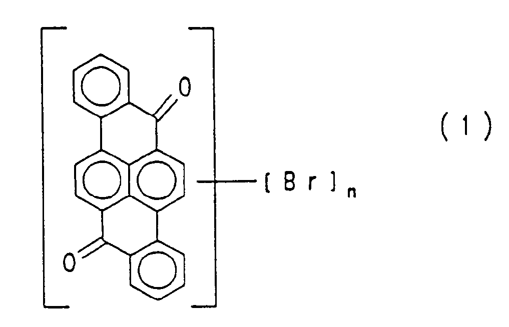 dans laquelle n est un nombre entier ou fractionnaire compris entre 0 et 4, caractérisé en ce que, dans le cadre d'une technique en un pot à plusieurs étapes, on traite d'abord du naphtalène, en chauffant à des températures comprises entre 60 à 85°C en présence de chlorure d'aluminium et d'un excès de 0 à 25 % de chlorure de benzoyle, avec une quantité deux fois molaire de chlorure de benzoyle, et on cyclise le 1,5-dibenzoylnaphtalène, après dilution de la masse fondue obtenue avec du chlorure d'aluminium et un chlorure d'un métal alcalin, et en présence d'un catalyseur à base d'un sel de fer, tout en introduisant un courant d'oxygène, pour obtenir une dibenzopyrènequinone de formule (1) dans laquelle n = 0, cette dernière étant ensuite mise à réagir, à une température comprise entre 125 et 150°C, avec une quantité 0 à 4 fois molaire de brome.

2. Procédé selon la revendication 1, caractérisé en ce qu'on utilise comme chlorure d'un métal alcalin du chlorure de sodium.

3. Procédé selon la revendication 1 ou 2, caractérisé en ce qu'on utilise en tant que catalyseur à base d'un sel de fer un halogénure de fer(III), de préférence du bromure de fer(III) et en particulier du chlorure de fer(III).

4. Procédé selon l'une ou plusieurs des revendications 1 à 3, caractérisé en ce qu'on utilise de 0,01 à 1,2, de préférence de 0,02 à 0,8 et en particulier de 0,04 à 0,6 mole d'un catalyseur à base d'un sel de fer par mole de 1,5-dibenzoylnaphtalène.

5. Procédé selon la revendication 1 ou 2, caractérisé en ce que la réaction du naphtalène avec le chlorure de benzoyle s'effectue à des températures de 65 à 75°C.

6. Procédé selon l'une ou plusieurs des revendications 1 à 4, caractérisé en ce que la cyclisation par oxydation s'effectue à des températures de 120 à 200°C.

7. Procédé selon la revendication 6, caractérisé en ce que la cyclisation par oxydation s'effectue de préférence à des températures de 130 à 160°C.

8. Procédé selon l'une ou plusieurs des revendications 1 à 7, caractérisé en ce que la bromation est effectuée à des températures de 125 à 135°C.

9. Procédé selon la revendication 1, caractérisé en ce qu'on utilise un excès de 0 à 5 % de chlorure de benzoyle.
